# FASCICULE DE BREVET EUROPEEN

(11) **EP 0 962 615 B1**
(45) Date de publication et mention de la délivrance du brevet: **01.03.2000**
(21) Numéro de dépôt: 98440091.1
(22) Date de dépôt: 07.05.1998
(51) Int. Cl.: E05D 3/02, E05C 19/00, A21C 5/00

(54) **Système de verrouillage/déverrouillage automatisé d'un couvercle d'une machine de type diviseuse de pâte à pain**
Automatische Ver/Entriegelungseinrichtung eines Deckels einer Teig-Teilmaschine
Automatic locking/unlocking system of a lid of a dough-dividing machine

(43) Date de publication de la demande: 08.12.1999
(73) Titulaire: BONGARD (S.A.), F-67810 Holtzheim (FR)
(72) Inventeur: Douvier, Serge, 67130 Barembach (FR)
(74) Mandataire: Littolff, Denis

(56) Documents cités:
- DE-U- 9 101 754
- FR-A- 2 703 719
- GB-A- 349 529
- US-A- 4 375 336
- US-A- 4 932 160

## Description

La présente invention concerne d'une manière générale des machines du type à cuve verticale munie d'un couvercle pivotant reposant en position fermée sur le ou les bord(s) supérieur(s) de ladite cuve et comportant une possibilité de verrouillage du couvercle sur la cuve.

Dans les machines visées par l'invention, le maniement du couvercle est réalisé manuellement par l'utilisateur pour ce qui concerne l'ouverture et la fermeture par pivotement, lorsque le dispositif de verrouillage n'est pas actif. Le pivotement s'effectue par rapport à un axe horizontal situé au voisinage d'un bord supérieur de la cuve, de préférence parallèlement à lui lorsque la forme de la cuve est d'allure prismatique.

Pour simplifier la lecture de la présente description, on se référera dans la suite à un exemple préférentiel de machines auxquelles s'applique l'invention, à savoir les diviseuses de pâte du type pâte à pain utilisées dans la chaîne de fabrication du pain, notamment dans les process industriels.

Ces diviseuses permettent le calibrage des pâtons obtenus à partir d'une masse de pâte ayant un poids prédéterminé. Ladite masse est déposée dans un premier temps sur le fond particulier dont est munie la cuve, qui peut être animée d'un mouvement vers le haut ou vers le bas, commandé par l'utilisateur lorsque le couvercle est fermé.

Ce fond se compose de plaquettes en plastique pour empêcher l'adhérence de la pâte, délimitant des portions égales de la surface totale et entre lesquelles coulissent des couteaux en acier inoxydable.

Selon une première étape, la pâte est répartie de manière homogène sur toutes la surface par remontée du fond vers le couvercle à une pression calculée. Puis, lorsque cette répartition est réalisée, les couteaux disposés entre les plaquettes s'élèvent pour sectionner la pâte en pâtons identiques.

Les étapes précitées imposent bien entendu que le couvercle soit verrouillé au contact de la cuve, et que ce verrouillage soit notamment apte à résister à une pression interne s'exerçant vers le haut. Cette pression peut en effet atteindre des valeurs importantes puisqu'on estime que l'effort vertical exercé peut monter jusqu'à 25 000 N.

La jonction cuve / couvercle, le verrouillage de ces éléments, leur mécanisme de pivotement, etc ... sont donc des points essentiels à prendre en considération dans la conception d'une telle machine.

La plupart des diviseuses actuellement sur le marché comportent un axe de pivotement en face duquel se trouve un unique crochet de verrouillage, par exemple pivotant autour d'un axe vertical que l'on actionne par un levier situé sur le couvercle après avoir refermé ce dernier.

Cette solution présente notamment l'inconvénient d'offrir moins de résistance latérale à la pression : les deux côtés du couvercle, de part et d'autre du crochet de verrouillage, ont tendance à bailler et à laisser fuir de la pâte. Sur ces côtés, les bords supérieurs de la cuve doivent être soigneusement nettoyés entre deux opérations successives, sous peine de ne pas pouvoir fermer correctement le couvercle et d'aggraver le phénomène précité.

Pour pallier cet inconvénient, on a prévu des systèmes de fermeture latéraux, avec notamment des crochets placés en bouts d'un arbre rotatif selon un axe horizontal, en général parallèle à l'axe de pivotement du couvercle, mais situé à l'opposé par rapport à l'ouverture supérieure de la cuve. Un levier permet d'actionner la rotation de l'arbre et de verrouiller simultanément les deux côtés du couvercle.

Cette solution est évidemment plus facilement réalisable pour des cuves prismatiques, la première solution étant très utilisée lorsque les cuves des diviseuses ont une allure cylindrique, ce qui est fréquemment le cas.

Les systèmes de fermetures latéraux équilibrent mieux les efforts, mais il faut rester vigilant sur la propreté des bords de la cuve, car les fuites, bien que moins fréquentes, restent cependant possibles.

Dans certains cas, les orifices prévus pour loger les crochets peuvent en outre véhiculer vers l'intérieur de la machine de la saleté préjudiciable au bon fonctionnement de celle-ci, voire incompatible avec les normes d'hygiène bien entendu draconiennes dans ce secteur. En effet, les crochets sont toujours attachés au couvercle et les logements correspondants sont par conséquent pratiqués dans la cuve, qui reçoit par ailleurs la pâte et comporte les organes essentiels de fonctionnement.

La solution proposée par la présente invention remédie aux divers inconvénients et insuffisances mentionnés. Cette solution est notamment avantageuse au niveau de l'hygiène requise pour ces appareillages, mais elle offre au surplus des possibilités techniques qui vont bien au-delà de ce qui était proposé jusqu'ici.

Ainsi, la machine de l'invention, répondant aux caractéristiques mentionnées au début, c'est-à-dire présentant une cuve d'allure verticale, fermée par un couvercle pivotant reposant en position fermée sur le ou les bords supérieurs de la cuve et comportant une possibilité de verrouillage du couvercle sur la cuve, le pivotement par rapport à un axe d'allure parallèle et situé au voisinage du ou d'un desdits bords supérieurs de la cuve s'effectuant manuellement, ladite machine comporte un système automatisé de verrouillage / déverrouillage du couvercle sur la cuve, comportant au moins un crochet fixé sur la cuve et des moyens de déplacer le couvercle entre deux positions, une position au contact des crochets dans laquelle le pivotement est inhibé et la fermeture de la cuve est hermétique, et une position libérée des crochets dans laquelle le pivotement est possible.

Le ou les crochets sont donc fixes, solidarisés à la cuve, sans qu'il y ait nécessité de prévoir d'orifices dont les inconvénients ont été soulignés ci-dessus. C'est le couvercle qui est animé d'un déplacement permettant d'aboutir au verrouillage / déverrouillage. Il faut noter que ce déplacement est, pour l'utilisateur, indépendant du pivotement traditionnel permettant d'ouvrir et de fermer le couvercle, qui est bien entendu toujours assuré.

Il y a bien une interférence mécanique entre ces mouvements, qui n'a cependant aucune conséquence sur les gestes traditionnellement réalisés par l'utilisateur pour ouvrir ou fermer le couvercle.

Le brevet français référencé FR-A-2 703 719 divulgue un système de fermeture hermétique de sécurité pour couvercles ou portes de four, de cuves ou d'autoclaves à cuisson sous pression basé sur un principe similaire, mais dans lequel les éléments fixes et mobiles sont inversés.

Ce n'est en effet pas le couvercle qui coulisse entre une position d'ouverture et une position de fermeture, mais un bandeau disposé sur la périphérie de l'ouverture de la cuve. Ce bandeau comporte des crochets dans lesquels viennent s'enclencher et se crocheter des pênes de compression disposés sur la périphérie du couvercle ou de la porte de fermeture.

Le fonctionnement du bandeau est basé sur l'existence d'une crémaillère actionnée par un pignon motorisé permettant le coulissement dudit bandeau.

Le principe du couvercle mobile entre une position d'ouverture et une position verrouillée est par exemple divulgué par le brevet britannique GB-A-0 349 529. Ce brevet concerne plus précisément une charnière verrouillable, s'appliquant à des boîtiers, attachés-cases, valises ou équivalents.

Ce principe repose sur une charnière permettant le coulissement d'une partie d'elle-même dans la direction de l'axe de rotation. Il peut par exemple s'agir de celle qui est rapportée au couvercle, qui peut être translatée par rapport à celle qui est fixée sur le container proprement dit. En position d'ouverture, et lorsqu'on ferme le couvercle sur ledit container, après avoir effectué le coulissement, il se produit un décalage entre les deux volumes.

La présente invention n'a évidemment pas pour objet de protéger les principes précités, mais des solutions techniques répondant au problème du verrouillage / déverrouillage du couvercle sur la cuve de la machine définie ci-dessus.

Selon la caractéristique principale de l'invention, les moyens de déplacer le couvercle consistent en deux excentriques autour desquels ledit couvercle est libre en rotation, lesdits excentriques étant fixés aux extrémités d'un arbre d'axe de rotation fixe par rapport à la cuve, dont la rotation peut être commandée selon une course limitée par des moyens d'entraînement fixés à la cuve, les positions extrêmes de ladite course rotative correspondant respectivement au verrouillage et au déverrouillage du couvercle sur la cuve.

Plus précisément, les moyens d'entraînement de l'arbre supportant les excentriques consistent en un vérin hydraulique dont le piston est relié audit arbre via au moins un organe mécanique transformant le mouvement de translation du piston en une rotation de course limitée dudit arbre.

Parmi les solutions mécaniques de liaison du piston et de l'arbre, selon une première variante, ledit organe est une fourche symétrique fixée à l'arbre supportant les deux excentriques, dont chaque branche comporte une glissière permettant le coulissement d'une goupille solidaire du piston du vérin hydraulique, l'action de ladite goupille sur les rebords des glissières imprimant un mouvement rotatif audit arbre.

Selon une seconde variante, cet organe mécanique est une biellette pivotant d'une part à l'extrémité du piston du vérin hydraulique et, d'autre part, par rapport à l'arbre supportant les excentriques.

Dans l'exposé des liaisons mécaniques nécessaires à la réalisation des déplacements du couvercle, on a indiqué qu'une rotation de ce dernier est possible autour des excentriques, et que l'arbre auquel ceux-ci sont fixés est lui-même libre en rotation par rapport à la cuve.

Cette rotation est réalisée via deux paliers équipant deux supports fixés sur un bord supérieur de la cuve, qu'ils surmontent, lesdits supports étant disposés au voisinage des excentriques.

De préférence, pour optimiser le fonctionnement mécanique, les moyens d'entraîner l'arbre supportant les excentriques en rotation coopèrent avec ledit arbre du voisinage d'un desdits supports de palier.

Le verrouillage s'organise ensuite en fonction du mouvement complexe imprimé par les excentriques au couvercle, dont la composante principale est une translation. Cette dernière n'est pas, comme on le verra dans la suite, totalement parallèle aux bords de la cuve, mais elle tend au parallélisme au moins dans une phase du mouvement. C'est dans cette phase que se produit la coopération avec le ou les crochet(s).

De préférence, les crochets de verrouillage sont au nombre de deux, disposés sur une ligne parallèle à l'axe de pivotement, sensiblement en face des supports de palier et ouverts dans leur direction pour permettre l'insertion de pattes du couvercle dans les crochets par translation, lesdits crochets présentant une paroi supérieure inhibant tout mouvement du couvercle vers le haut après insertion, car ils bloquent verticalement lesdites pattes.

La conception du système mécanique à excentriques et le positionnement relatif de ses composants par rapport à la cuve et au couvercle sont essentiels pour permettre que la phase quasi parallèle mentionnée se produise lorsque le couvercle est au voisinage des crochets, et que le verrouillage / déverrouillage puisse ainsi avoir lieu dans de bonnes conditions.

Plus précisément, l'arbre et les deux excentriques coopèrent avec, et sont disposés par rapport à, respectivement la cuve et le couvercle de telle sorte qu'en position déverrouillée, le couvercle présente un angle avec la surface définie par les bords supérieurs de la cuve, la ligne de contact entre eux se trouvant à proximité des crochets, le mouvement complexe imprimé au couvercle par la rotation des excentriques, aboutissant au contact hermétique sur toute la surface des bords de la cuve en position de verrouillage dans les crochets, produisant au cours du déplacement, par glissement d'une surface de contact s'agrandissant progressivement, un auto-nettoyage des bords.

Cette fonction d'auto-nettoyage est importante car elle garantit un fonctionnement optimal de la liaison cuve / couvercle, et assure par conséquent la pérennité de la machine elle-même. Les contraintes mécaniques parasites dues à des bords mal nettoyés peuvent en effet à la longue déformer des pièces participant à l'interface couvercle / cuve, dont l'importance a été montrée ci-dessus, et altérer le comportement de la diviseuse.

Selon une possibilité additionnelle, la surface délimitée par le ou les bords supérieurs de la cuve est en pente, la zone ou le bord le plus haut comportant le mécanisme de pivotement du couvercle.

La diviseuse se présente alors comme un pupitre, ce qui améliore considérablement son ergonomie, pour le plus grand bénéfice de ses utilisateurs. L'ensemble des organes internes, plateaux, couteaux, mécanismes d'entraînement, présentent alors un axe de fonctionnement perpendiculaire à ladite surface, formant donc un angle avec la verticale égal à celui que forme la surface d'ouverture avec le plan horizontal.

Comme on l'a indiqué, bien que cette invention puisse s'appliquer à de nombreux types de machines répondant à une configuration basiquement constituée d'une cuve munie d'un couvercle pivotant à sa partie supérieure, l'invention s'applique préférentiellement aux diviseuses de pâte à pain.

La conception qui en est à la base marque un changement profond par rapport à ce qui était réalisé jusqu'alors, puisque les éléments fixes et mobiles ont été inversés, sans que leurs volumes et fonctions respectives aient pu d'emblée y inciter. L'invention marque donc déjà une originalité certaine dans l'idée qui la fonde, mais elle apporte au surplus des avantages substantiels, à la fois fonctionnels et dans les résultats obtenus.

Son objet va à présent être décrit plus en détail, au moyen d'exemples illustrés par les figures placées en annexe, pour lesquelles :
- la figure 1 est une vue en perspective d'une diviseuse selon l'invention ;
- la figure 2 est une vue de côté de cette même diviseuse ;
- la figure 3 montre une vue en perspective du couvercle seul ;
- la figure 4 représente une vue éclatée, toujours en perspective, des éléments participant à l'invention, selon une variante présentée ;
- la figure 5 est une coupe de la configuration suivant ladite variante ;
- la figure 6 est une vue partiellement en section de la configuration suivant une seconde variante présentée, en position de verrouillage ;
- la figure 7 est une section partielle identique, en position déverrouillée, couvercle fermé ;
- la figure 8 représente toujours la même vue en section partielle, couvercle ouvert ; et
- la figure 9 en montre schématiquement une vue externe de côté, le couvercle étant en cours d'ouverture.

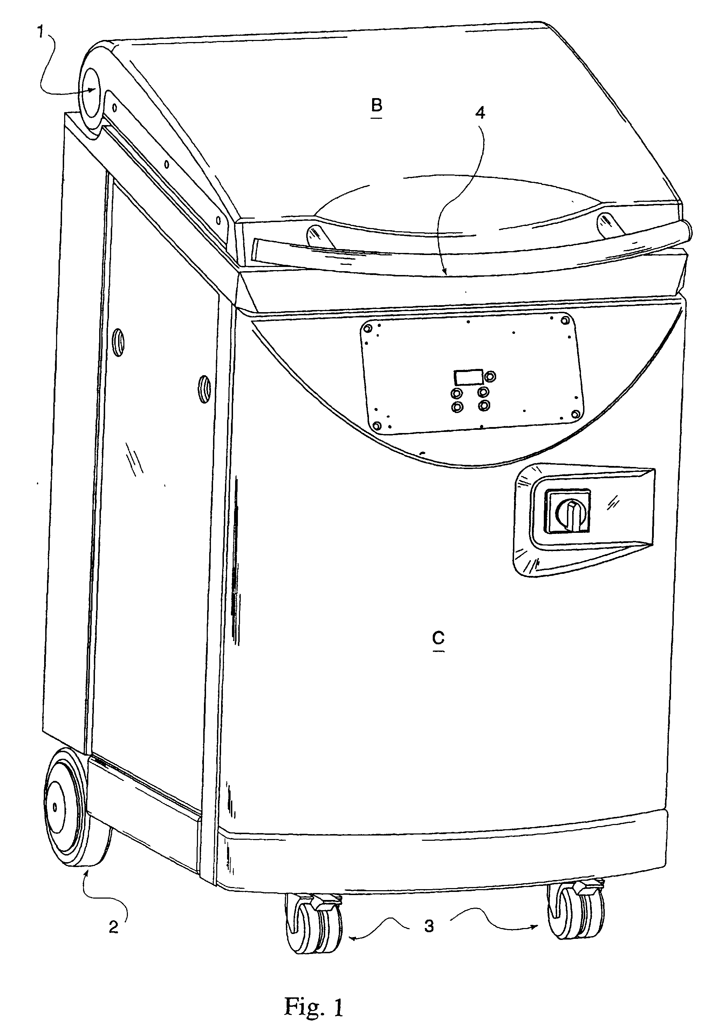

Dans les différentes figures, les mêmes références désignent les mêmes éléments, pour améliorer la lisibilité de l'ensemble. La figure 1 montre une diviseuse équipée du système de verrouillage de l'invention, comprenant une cuve (C) et un couvercle (B) pivotant sur ladite cuve autour de deux galets cylindriques (1) disposés aux extrémités du couvercle (B) (un seul est visible en figure 1).

Cette diviseuse, montée sur roulettes (2, 3), comporte sur sa façade avant des organes notamment de commande qui ne font pas partie de l'invention proprement dite et ne seront donc pas expliqués en détail dans la suite.

Le couvercle (B) comporte une main courante (4) de préhension permettant à l'utilisateur de le manipuler pour l'ouvrir et le fermer par pivotement autour des galets (1). Il est ici représenté en position verrouillée, et les surfaces de contact sont donc hermétiquement plaquées l'une contre l'autre.

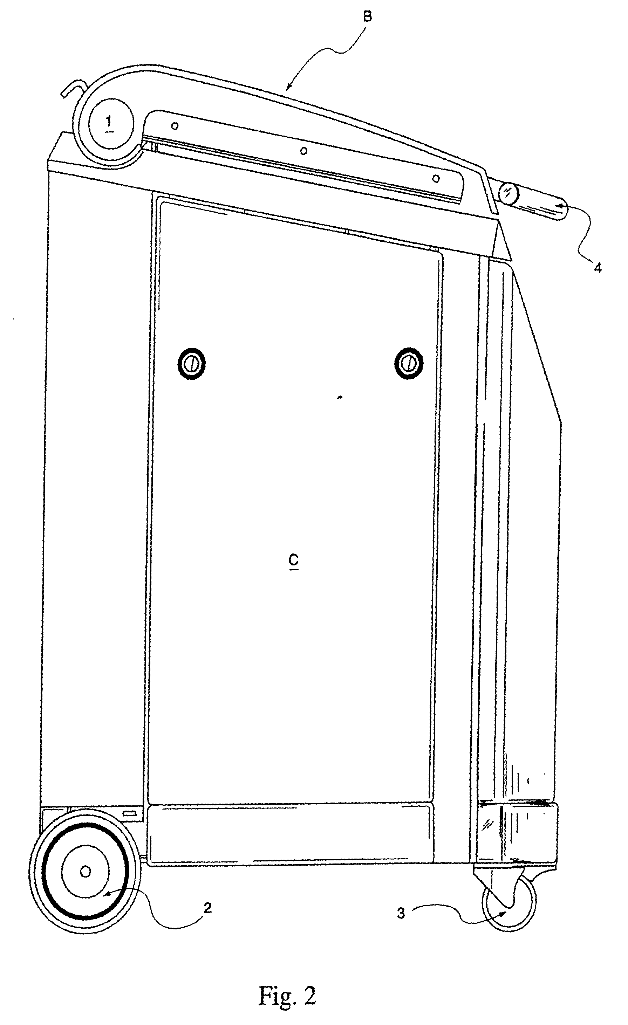

Ceci est également manifeste en figure 2, qui fait en outre mieux apparaître la pente du couvercle (B) et par conséquent de l'ouverture supérieure de la cuve (C), par rapport à l'horizontale. La forme de la cuve (C) étant d'allure prismatique, le verrouillage et le pivotement prennent place respectivement sur les bords inférieur et supérieur de l'ouverture de la cuve (C).

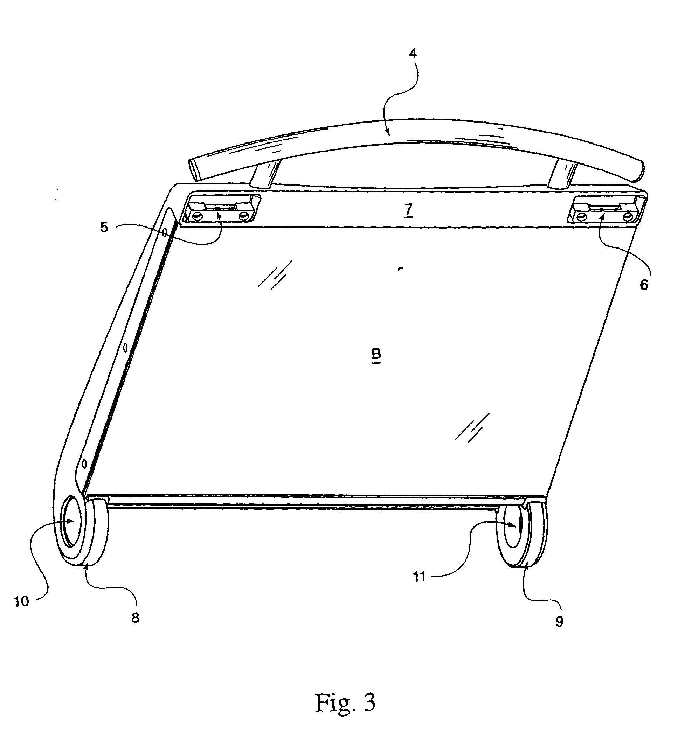

Le couvercle est représenté plus clairement en figure 3, par en dessous, montrant en particulier les pattes (5, 6) dans lesquelles s'insèrent les crochets lors du verrouillage. Ces pattes (5, 6) sont simplement vissées dans la bordure (7) du couvercle à laquelle est fixée la main courante (4) de préhension.

Le côté opposé du couvercle (B) comporte deux joues latérales (8, 9) munies d'orifices cylindriques (10, 11), dans lesquels se logent les galets (1) (non représentés sur cette figure) autour desquels a lieu le pivotement du couvercle (B).

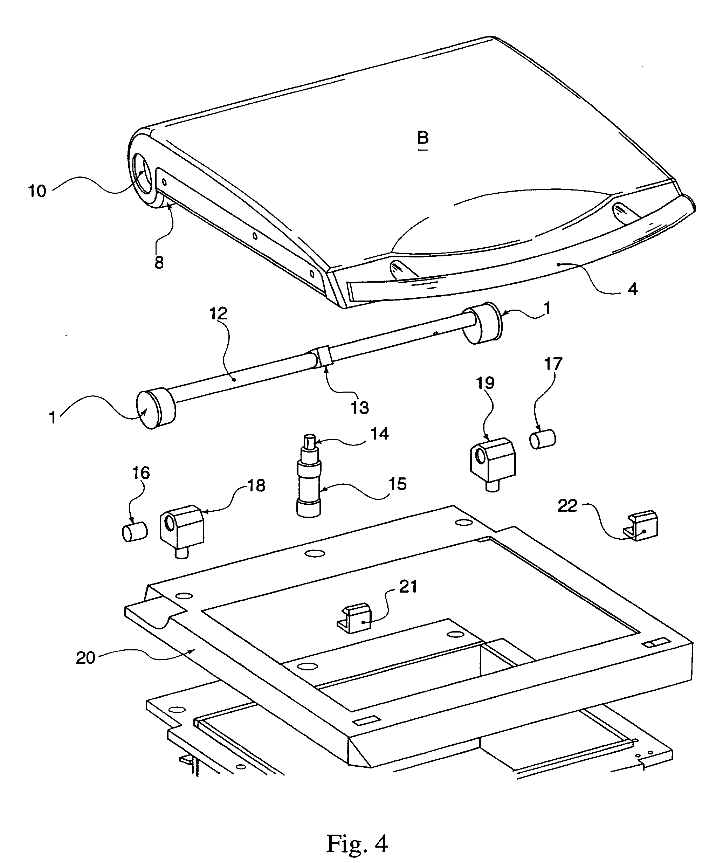

Lesdits galets (1) sont montés de façon excentrée, et sont par conséquent les excentriques (1) précédemment mentionnés, par rapport à l'arbre (12), comme cela est visible notamment en figure 4. Au milieu dudit arbre, selon une des variantes présentées de l'invention, une pièce (13) permet la coopération avec le piston (14) d'un vérin hydraulique (15). Celui-ci confère à l'arbre (12) un mouvement de rotation selon une course limitée réversible, répercutée aux excentriques (1) qui confèrent à leur tour au couvercle (B) un mouvement complexe à composante principale translative, d'avant en arrière ou vice-versa.

L'arbre (12) est monté dans des paliers (16, 17) eux-mêmes insérés dans des supports (18, 19) fixés à la partie supérieure (20) de la cuve (C) au niveau du bord supportant le mécanisme de pivotement, les extrémités de ce bord étant abaissées pour permettre le mouvement des joues (8, 9).

Les crochets (21, 22) sont fixés à la partie (20), du côté opposé, de manière à pouvoir coopérer avec les pattes (5, 6) précitées.

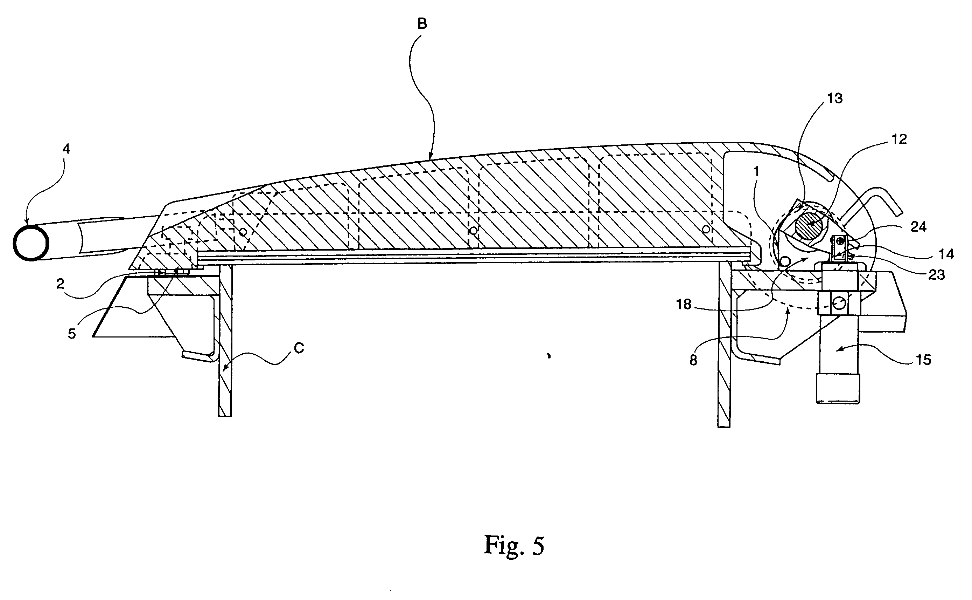

La figure 5 montre le couvercle (B) verrouillé dans les crochets de la cuve (C), via le couple crochet (21) / patte (5), la fourche (13) fixée à l'arbre (12) étant alors en position de verrouillage lorsque le piston (14) est en position basse dans le vérin (15). La glissière (23) pratiquée dans l'unique branche visible de la fourche (13), du fait de la coupe effectuée au milieu de l'arbre (12), permet à une goupille (24) fixée au piston (14) de transformer le mouvement translatif de ce dernier en une rotation de l'arbre (13), en conservant un degré de liberté pour la goupille (24).

En position haute du piston (14), l'arbre (12) tourne, ainsi que les excentriques (1), dans le sens des aiguilles d'une montre. Le couvercle se déplace alors vers l'arrière, le côté comprenant lesdits excentriques (1) subissant en outre une légère élévation.

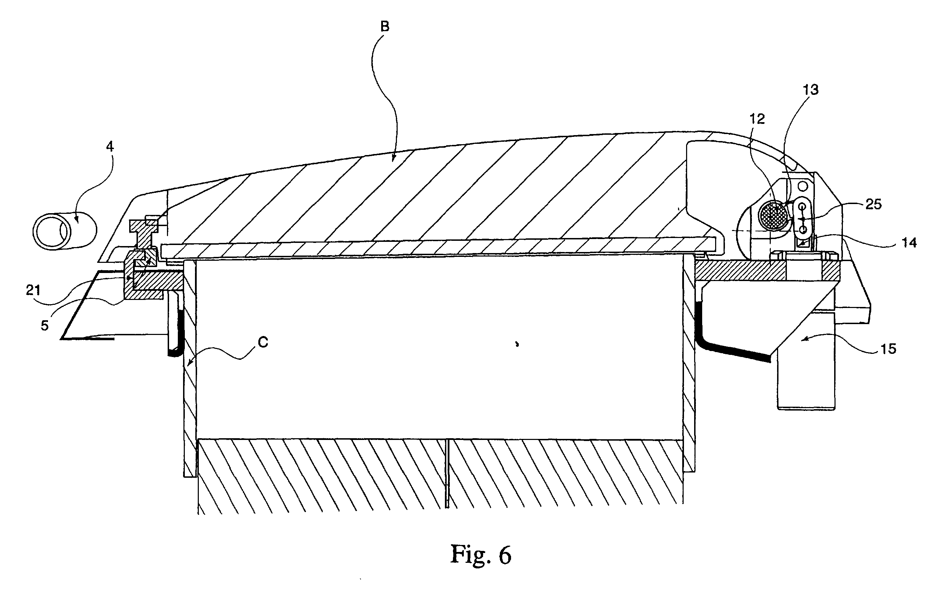

La figure 6 montre le même état relatif couvercle (B) / cuve (C), avec une transmission du mouvement du piston (14) un peu différente. Sur ce dernier est montée pivotante une goupille (25), qui pivote également par rapport à la pièce (13) fixée à l'arbre (12). Ladite pièce (13) est au surplus montée à proximité d'un des supports de palier.

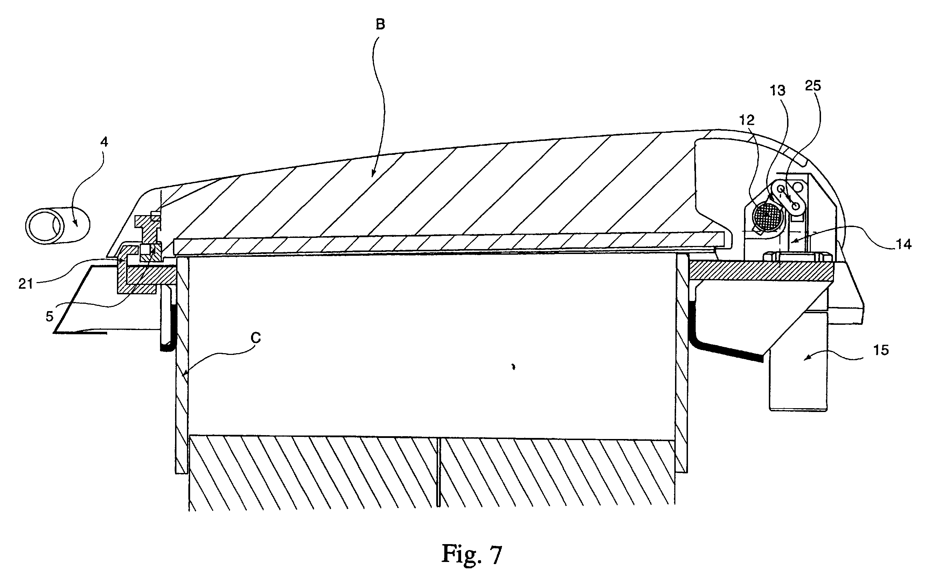

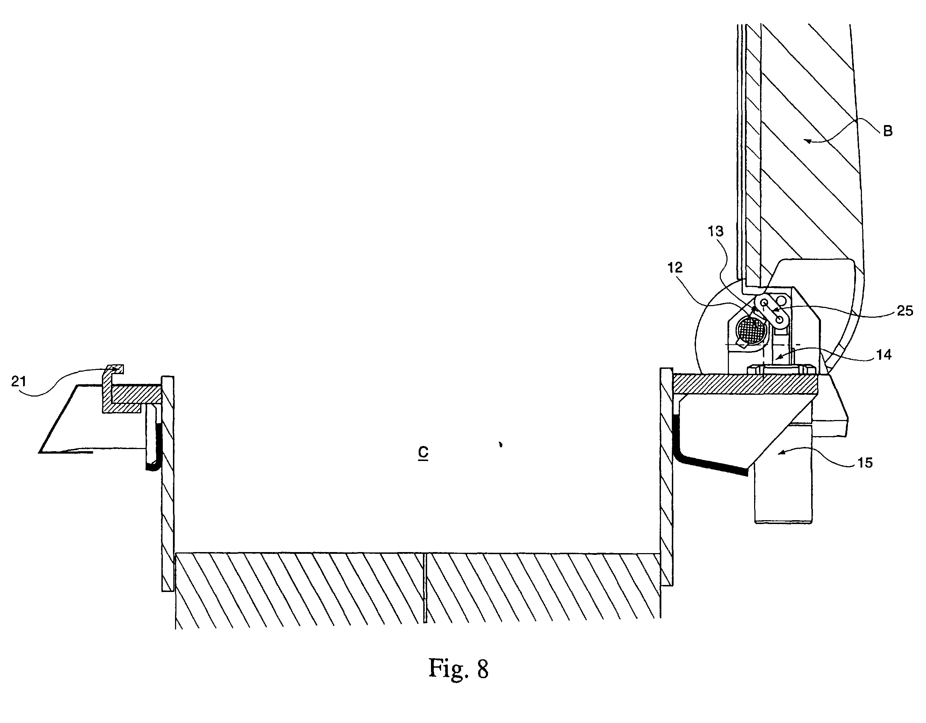

La figure 7 représente la position déverrouillée, piston (14) en position haute, selon l'explication précédente. Le crochet (21) et la patte (5) ne sont plus en contact, et le couvercle (B) et le bord supérieur de la cuve (C) font un très petit angle s'ouvrant vers l'arrière. La paroi supérieure du crochet (21) ne s'oppose plus au pivotement du couvercle (B), qui peut donc être ouvert. C'est ce qui est montré en figure 8.

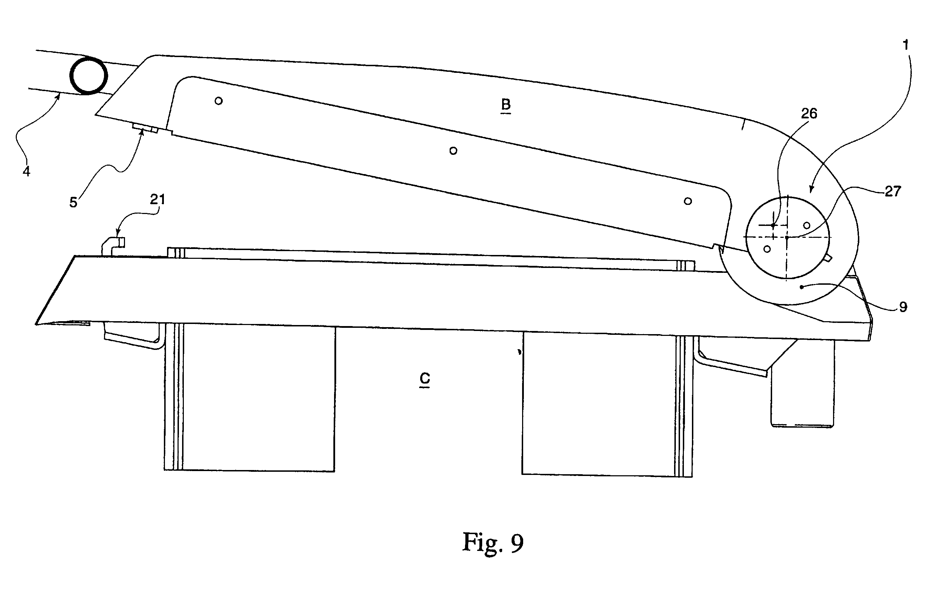

La figure 9 remontre l'ouverture du couvercle (B), de l'extérieur, et indique la position (26) de l'axe de l'arbre (12), évidemment excentré par rapport à l'axe de pivotement (27) du couvercle (B).

En sens inverse, lors de la fermeture, on part de la position apparaissant en figure 7, pour aboutir à celle de la figure 6. Il y a un abaissement du côté du couvercle (B) comportant le mécanisme de pivotement concomitant à une translation vers l'avant. Le bord du couvercle (B) tangente celui de la cuve (C) avant que les crochets (21, 22) ne s'insèrent dans les pattes (5, 6), et au cours de cette insertion jusqu'à la fin du mouvement. Ce mouvement réalise un autonettoyage desdits bords.

Les configurations illustrées ne sont bien entendu que des exemples non limitatifs de l'invention, qui contient les autres variantes à la portée de l'homme de l'art qui sont contenues dans les revendications annexées.

## Revendications

1. Machine à cuve (C) d'allure verticale fermée par un couvercle (B) pivotant reposant en position fermée sur le ou les bords supérieurs de la cuve (C) et comportant une possibilité de verrouillage du couvercle (B) sur la cuve (C), le pivotement par rapport à un axe d'allure parallèle et situé au voisinage du ou d'un desdits bords supérieurs de la cuve (C) s'effectuant manuellement, ladite machine étant dotée d'un système automatisé de verrouillage / déverrouillage du couvercle (B) sur la cuve (C), comportant au moins un crochet (21, 22) fixé sur la cuve (C) et des moyens de déplacer le couvercle (B) entre deux positions, une position au contact des crochets (21, 22) dans laquelle le pivotement est inhibé et la fermeture de la cuve (C) est hermétique, et une position libérée des crochets (21, 22) dans laquelle le pivotement est possible, **caractérisée en ce que** les moyens de déplacer le couvercle (B) consistent en deux excentriques (1) autour desquels ledit couvercle (B) est libre en rotation, lesdits excentriques (1) étant fixés aux extrémités d'un arbre (12) d'axe de rotation fixe par rapport à la cuve (C), dont la rotation peut être commandée selon une course limitée par des moyens d'entraînement (14, 15) fixés à la cuve (C), les positions extrêmes de ladite course rotative correspondant respectivement au verrouillage et au déverrouillage du couvercle (B) sur la cuve (C).

2. Machine à cuve d'allure verticale fermée par un couvercle pivotant selon la revendication précédente, caractérisée en ce que les moyens d'entraînement de l'arbre (12) supportant les excentriques (1) consistent en un vérin hydraulique (15) dont le piston (14) est relié audit arbre (12) via au moins un organe mécanique (13) transformant le mouvement de translation du piston (14) en une rotation de course limitée dudit arbre (12).

3. Machine à cuve d'allure verticale fermée par un couvercle pivotant selon la revendication précédente, caractérisée en ce que ledit organe (13) est une fourche symétrique fixée à l'arbre (12) supportant les deux excentriques (1), dont chaque branche comporte une glissière (23) permettant le coulissement d'une goupille (24) solidaire du piston (14) du vérin hydraulique (15), l'action de ladite goupille (24) sur les rebords des glissières (23) imprimant un mouvement rotatif audit arbre (12).

4. Machine à cuve d'allure verticale fermée par un couvercle pivotant selon la revendication 2, caractérisée en ce que ledit organe mécanique est une biellette (25) pivotant d'une part à l'extrémité du piston (14) du vérin (15) hydraulique et, d'autre part, par rapport à l'arbre (12) supportant les excentriques (1).

5. Machine à cuve d'allure verticale fermée par un couvercle pivotant selon l'une des revendications 2 à 5, caractérisée en ce que l'arbre (12) supportant les excentriques (1) est libre en rotation dans deux paliers (16, 17) équipant deux supports (18, 19) fixés sur un bord supérieur (20) de la cuve (C), qu'ils surmontent, lesdits supports (18, 19) étant disposés au voisinage des excentriques (1).

6. Machine à cuve d'allure verticale fermée par un couvercle pivotant selon la revendication précédente, caractérisée en ce que les moyens d'entraîner l'arbre (12) supportant les excentriques (1) en rotation coopèrent avec ledit arbre (12) au voisinage d'un desdits supports (18, 19) de palier (16, 17).

7. Machine à cuve d'allure verticale fermée par un couvercle pivotant selon l'une quelconque des revendications 6 et 7, caractérisée en ce que les crochets de verrouillage (21, 22) sont au nombre de deux, disposés sur une ligne parallèle à l'axe de pivotement, sensiblement en face des supports de palier (18, 19) et ouverts dans leur direction pour permettre l'insertion de pattes (5, 6) du couvercle (B) dans les crochets (21, 22) par translation, lesdits crochets (21, 22) présentant une paroi supérieure inhibant tout mouvement du couvercle (B) vers le haut après insertion, par blocage vertical desdites pattes (5, 6).

8. Machine à cuve d'allure verticale fermée par un couvercle pivotant selon l'une quelconque des revendications 2 à 8, caractérisée en ce que l'arbre (12) et les deux excentriques (1) coopèrent avec, et sont disposés par rapport à, respectivement la cuve (C) et le couvercle (B) de telle sorte qu'en position déverrouillée, le couvercle (B) présente un angle avec la surface définie par les bords supérieurs de la cuve (C), la ligne de contact entre eux se trouvant à proximité des crochets (21, 22), le mouvement complexe imprimé au couvercle (B) par la rotation des excentriques (1) aboutissant au contact hermétique sur toute la surface des bords de la cuve (C) en position de verrouillage dans les crochets (21, 22), produisant au cours du déplacement, par glissement d'une surface de contact s'agrandissant progressivement, un auto-nettoyage des bords.

9. Machine à cuve d'allure verticale fermée par un couvercle pivotant selon l'une quelconque des revendications précédentes, caractérisée en ce que la surface délimitée par le ou les bords supérieurs de la cuve (C) est en pente, la zone ou le bord le plus haut comportant le mécanisme de pivotement du couvercle (B).

10. Machine à cuve d'allure verticale fermée par un couvercle pivotant selon l'une quelconque des revendications précédentes, caractérisée en ce qu'elle est une diviseuse de pâte du type pâte à pain.

## Patentansprüche

1. Maschine mit durch einen schwenkbaren Deckel (B) verschlossenem, vertikal orientierten Behälter (C), der in der geschlossenen Stellung auf dem oder den oberen Rändern des Behälters (C) aufliegt und eine Möglichkeit zum Verriegeln des Deckels (B) am Behälter (C) aufweist, wobei die Schwenkung in bezug auf eine parallel verlaufende und in der Nähe des oder eines oberen Randes des Behälters (C) befindliche Achse manuell erfolgt, wobei die Maschine mit einem automatisierten Verriegelungs/Entriegelungssystem für den Deckel (B) am Behälter (C) versehen ist, das wenigstens einen am Behälter (C) befestigen Haken (21, 22) und Mittel zum Bewegen des Deckels (B) zwischen zwei Positionen aufweist, einer Position in Kontakt mit den Haken (21, 22), in der die Schwenkung verhindert wird und der Behälter (C) dicht verschlossen ist, und einer von den Haken (21, 22) freigegebenen Position, in der die Schwenkung möglich ist, **dadurch gekennzeichnet, daß** die Mittel zum Bewegen des Deckels (B) aus zwei Exzentern (1) bestehen, um die der Deckel (B) frei drehbar ist, wobei die Exzenter (1) an den Enden einer Welle (12) mit in bezug auf den Behälter (C) fester Drehachse befestigt sind, deren Drehung längs eines begrenzten Hubs durch am Behälter (C) befestige Antriebsmittel (14, 15) gesteuert werden kann, wobei die Extrempositionen des Drehhubs der Verriegelung bzw. der Entriegelung des Deckels (B) am Behälter (C) entsprechen.

2. Maschine mit durch einen schwenkbaren Deckel verschlossenem, vertikal orientierten Behälter nach dem vorangehenden Anspruch, dadurch gekennzeichnet, daß die Mittel zum Antreiben der Welle (12), die die Exzenter (1) trägt, aus einem Hydraulikzylinder (15) bestehen, dessen Kolben (14) mit der Welle (12) über ein mechanisches Element (13) verbunden ist, das die Translationsbewegung des Kolbens (14) in eine Drehung mit begrenztem Hub der Welle (12) umwandelt.

3. Maschine mit durch einen schwenkbaren Deckel verschlossenem, vertikal orientierten Behälter nach dem vorangehenden Anspruch, dadurch gekennzeichnet, daß das Element (13) eine symmetrische Gabel ist, die an der die beiden Exzenter (1) tragenden Welle (12) befestigt ist und wovon jeder Zinken eine Gleitschiene (23) enthält, in der ein mit dem Kolben (14) des Hydraulikzylinders (15) verbundener Stift (24) gleiten kann, wobei die Wirkung des Stifts (24) an den Rändern der Gleitschiene (23) eine Drehbewegung der Welle (12) erzwingt.

4. Maschine mit durch einen schwenkbaren Deckel verschlossenem, vertikal orientierten Behälter nach Anspruch 2, dadurch gekennzeichnet, daß das mechanische Element ein Schwingarm (25) ist, der einerseits am Ende des Kolbens (14) des Hydraulikzylinders (15) angelenkt ist und andererseits in bezug auf die die Exzenter (1) tragende Welle (12) schwenkt.

5. Maschine mit durch einen schwenkbaren Deckel verschlossenem, vertikal orientierten Behälter nach einem der Ansprüche 2 bis 5, dadurch gekennzeichnet, daß die die Exzenter (1) tragende Welle (12) in zwei Lagern (16, 17) frei drehbar ist, mit denen zwei Träger (18, 19) ausgerüstet sind, die an einer Oberkante (20) des Behälters (C), über die sie vorstehen, befestigt sind, wobei die Träger (18, 19) in der Nähe der Exzenter (1) angeordnet sind.

6. Maschine mit durch einen schwenkbaren Deckel verschlossenem, vertikal orientierten Behälter nach dem vorangehenden Anspruch, dadurch gekennzeichnet, daß die Mittel zum Antreiben der die Exzenter (1) drehbar unterstützenden Welle mit der Welle (12) in der Umgebung eines der Träger (18, 19) der Lager (16, 17) zusammenwirken.

7. Maschine mit durch einen schwenkbaren Deckel verschlossenem, vertikal orientierten Behälter nach irgendeinem der Ansprüche 6 und 7, dadurch gekennzeichnet, daß die Verriegelungshaken (21, 22) in der Anzahl zwei vorliegen, auf einer zur Schwenkachse parallelen Linie im wesentlichen gegenüber der Lagerträger (18, 19) angeordnet sind und in deren Richtung geöffnet sind, um das Einscheiben von Ansätzen (5, 6) des Deckels (B) in die Haken (21, 22) in Translationsrichtung zu ermöglichen, wobei die Haken (21, 22) eine obere Wand aufweisen, die nach dem Einschieben durch vertikales Blockieren der Ansätze (5, 6) jegliche Bewegung des Deckels (B) nach oben verhindern.

8. Maschine mit durch einen schwenkbaren Deckel verschlossenem, vertikal orientierten Behälter nach irgendeinem der Ansprüche 2 bis 8, dadurch gekennzeichnet, daß die Welle (12) und die beiden Exzenter (1) mit dem Behälter (C) und dem Deckel (B) derart zusammenwirken und in bezug auf diese derart angeordnet sind, daß der Deckel (B) in der entriegelten Position mit der durch die oberen Ränder des Behälters (C) definierten Oberfläche einen Winkel bildet, wobei sich die Kontaktlinie zwischen ihnen in der Nähe der Haken (21, 22) befindet, wobei die dem Deckel (B) durch die Drehung der Exzenter (1) auf gezwungene komplexe Bewegung in der in den Haken (21, 22) verriegelten Position in einem hermetischen Kontakt auf der gesamten Oberfläche der Ränder des Behälters (C) endet, wobei während der Bewegung durch Gleiten einer progressiv größer werdenden Kontaktoberfläche eine Selbstreinigung der Ränder geschaffen wird.

9. Maschine mit durch einen schwenkbaren Deckel verschlossenem, vertikal orientierten Behälter nach irgendeinem der vorangehenden Ansprüche, dadurch gekennzeichnet, daß die durch den oder die oberen Ränder des Behälters (C) begrenzte Oberfläche geneigt ist, wobei die höchste Zone oder der höchste Rand den Schwenkmechanismus für den Deckel (B) aufweist.

10. Maschine mit durch einen schwenkbaren Deckel verschlossenem, vertikal orientierten Behälter nach irgendeinem der vorangehenden Ansprüche, dadurch gekennzeichnet, daß sie eine Teilungsvorrichtung für Teigwaren des Typs Brotteig ist.

## Claims

1. Vertically oriented vat machine (C) closed by a pivoting lid (B) resting in the closed position on the upper edge or edges of the vat (C) and including the possibility of locking the lid (B) on the vat (C), the pivoting about an axis of parallel orientation and situated adjacent to the or one of the said upper edges of the vat (C) being effected manually, the said machine being provided with an automatic system for locking/unlocking the lid (B) on the vat (C), including at least one hook (21, 22) fixed on the vat (C) and means for displacing the lid (B) between two positions, a position in contact with the hooks (21, 22) in which pivoting is prevented and the vat (C) is hermetically closed, and a position free of the hooks (21, 22) in which pivoting is possible, **characterised by the fact that** the means for displacing the lid (B) consist of two eccentrics (1) about which the said lid (B) is free to rotate, the said eccentrics (1) being fixed to the ends of a shaft (12) having a fixed axis of rotation relative to the vat (C), the rotation of which may be controlled over a limited travel by drive means (14, 15) fixed to the vat (C), the extreme positions of the said rotational travel corresponding to the locking and the unlocking respectively of the lid (B) on the vat (C).

2. Vertically oriented vat machine closed by a pivoting lid as described in the preceding claim, characterised by the fact that the means for driving the shaft (12) supporting the eccentrics (1) consist of a hydraulic ram (15) the piston (14) of which is connected to the said shaft (12) via at least one mechanical organ (13) transforming the translation movement of the piston (14) into a rotation of limited travel of the said shaft (12).

3. Vertically oriented vat machine closed by a pivoting lid as described in the preceding claim, characterised by the fact that the said organ (13) is a symmetrical fork fixed to the shaft (12) supporting the two eccentrics (1), each branch of which includes a slideway (23) permitting sliding of a pin (24) firmly attached to the piston (14) of the hydraulic ram (15), the action of the said pin (24) on the edges of the slideways (23) communicating a rotary movement to the said shaft (12).

4. Vertically oriented vat machine closed by a pivoting lid as described in claim 2, characterised by the fact that the said mechanical organ is a connecting rod (25) pivoting, on the one hand, on the end of the piston (14) of the hydraulic ram (15) and, on the other, relative to the shaft (12) supporting the eccentrics (1).

5. Vertically oriented vat machine closed by a pivoting lid as described in one of claims 2 to 5, characterised by the fact that the shaft (12) supporting the eccentrics (1) is free to rotate in two bearings (16, 17) fitted to two supports (18, 19) fixed to an upper edge (20) of the vat (C), which they extend above, the said supports (18, 19) being arranged in the vicinity of the eccentrics (1).

6. Vertically oriented vat machine closed by a pivoting lid as described in the preceding claim, characterised by the fact that the means for driving the shaft (12) supporting the eccentrics (1) in rotation co-operate with the said shaft (12) in the vicinity of one of the said bearing (16, 17) supports (18, 19).

7. Vertically oriented vat machine closed by a pivoting lid as described in either of claims 6 or 7,
characterised by the fact that the locking hooks (21, 22) are two in number, arranged on a line parallel with the pivot axis, substantially opposite the bearing supports (18, 19) and open in their direction to permit insertion of the dogs (5, 6) of the lid (B) in the hooks (21, 22) by translation, the said hooks (21, 22) having an upper wall preventing any upward movement of the cover (B) after insertion, by vertically clamping the said dogs (5, 6) .

8. Vertically oriented vat machine closed by a pivoting lid as described in any one of claims 2 to 8,
characterised by the fact that the shaft (12) and the two eccentrics (1) co-operate with, and are arranged relative to, the vat (C) and the lid (B) respectively in such a way that in the unlocked position the lid (B) is at an angle with the surface defined by the upper edges of the vat (C), the line of contact between them being in the proximity of the hooks (21, 22), the complex movement communicated to the lid (B) by rotation of the eccentrics (1) resulting in hermetic contact over the whole surface of the edges of the vat (C) in the locking position in the hooks (21, 22), producing self-cleaning of the edges in the course of the displacement, by sliding of a contact surface progressively increasing in size.

9. Vertically oriented vat machine closed by a pivoting lid as described in any one of the preceding claims,
characterised by the fact that the surface defined by the upper edge or edges of the vat (C) slopes, the highest zone or edge including the pivoting mechanism of the lid (B).

10. Vertically oriented vat machine closed by a pivoting lid as described in any one of the preceding claims,
characterised by the fact that it is a divider for dough of the bread dough type.
